(19) Europäisches Patentamt
European Patent Office
Office européen des brevets

(11) **EP 3 550 903 B1**

(12) **EUROPEAN PATENT SPECIFICATION**

(45) Date of publication and mention
of the grant of the patent:
**26.05.2021 Bulletin 2021/21**

(51) Int Cl.:
*H04L 5/00* (2006.01)     *H04W 72/04* (2009.01)
*H04W 72/12* (2009.01)

(21) Application number: **17876060.9**

(22) Date of filing: **29.11.2017**

(86) International application number:
**PCT/CN2017/113557**

(87) International publication number:
**WO 2018/099395 (07.06.2018 Gazette 2018/23)**

(54) **RESOURCE SCHEDULING METHOD, APPARATUS, AND SYSTEM**

RESSOURCENPLANUNGSVERFAHREN, -VORRICHTUNG UND -SYSTEM

SYSTÈME, APPAREIL, ET PROCÉDÉ DE PROGRAMMATION DE RESSOURCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2016 CN 201611091416**

(43) Date of publication of application:
**09.10.2019 Bulletin 2019/41**

(73) Proprietor: **ZTE Corporation**
**Shenzhen, Guangdong 518057 (CN)**

(72) Inventors:
• **ZHANG, Qinghong**
**Shenzhen, Guangdong 518057 (CN)**
• **AN, Hong**
**Shenzhen, Guangdong 518057 (CN)**
• **LIU, Wenhao**
**Shenzhen, Guangdong 518057 (CN)**

(74) Representative: **Brunazzi, Stefano**
**Jacobacci & Partners S.p.A.**
**Via Senato, 8**
**20121 Milano (IT)**

(56) References cited:
**WO-A1-2016/019581      WO-A1-2016/142132**
**CN-A- 102 196 580      CN-A- 102 740 484**
**CN-A- 103 427 937      CN-A- 105 491 557**
**CN-A- 105 580 466      US-A1- 2007 217 362**
**US-A1- 2015 256 308**

• **HUAWEI ET AL: "NB-PUSCH resource
allocation", 3GPP DRAFT; R1-161885, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG1, no.
Sophia-Antipolis, FR; 20160322 - 20160324 16
March 2016 (2016-03-16), XP051081002,
Retrieved from the Internet:
URL:http://www.3gpp.org/ftp/tsg_ran/WG1_RL
1/TSGR1_AH/LTE_NB-IoT_1603/Docs/ [retrieved
on 2016-03-16]**

**Description**

<u>**Technical Field**</u>

The present disclosure relates to the field of communications, and in particular to a resource scheduling method, apparatus and system.

<u>**Background**</u>

When a radio communication technology is developed to 3<sup>rd</sup> Generation Wireless Communication (abbreviated as 3G), there emerges two mainstream duplexing technologies including Frequency Division Duplexing (abbreviated as FDD) and Time Division Duplexing (abbreviated as TDD). The FDD is evolved from 2<sup>nd</sup> Generation Wireless Communication (abbreviated as 2G) and has a better forward compatibility and a more mature industrial chain. However, the follower TDD is more adapted to a traditional user behavior having a Downlink (abbreviated as DL) traffic volume greater than an Uplink (abbreviated as UL) traffic volume, and DL and UL cooperation and intelligent antenna technology for the TDD have more advantages than the FDD. The FDD and the TDD are competed with each other and are learnt from each other to jointly accelerate the progress of the radio communication technology.

Along with the further development of the industry, new services such as high-definition video call, circle-of-friend video and picture sharing are coming forth frequently. The traditional acknowledgment that a DL service is greater than a UL service is no longer applicable. The contradiction between the static planning of a UL/DL resource of the traditional TDD and FDD systems and the diversity and dynamicity of user services is increasingly becoming obvious, and thus the mismatch between the service requirement and the resource allocation as well as the resource waste is more and more obvious.

Furthermore, new requirements on low-level compatibility and consistency are pushed forward by 5<sup>th</sup> Generation Wireless Communication (abbreviated as 5G) and a Software Defined Network (abbreviated as SDN). A future mainstream technology is tended to no longer distinguish a system, or is multi-system compatible, or shields a low-level technology, and can be forwardly compatible with the existing Long Term Evolution (abbreviated as LTE) FDD/TDD technology.

Therefore, there is a problem that resource scheduling methods in related technologies cannot meet the network requirement in the related art.

The International Patent Application WO2016/142132A1 discloses methods using Downlink Control Information (DCI) for Sub-Subframe Control and related nodes and terminals.

The standardization technical document 3GPP DRAFT RT1-161885 illustrates a solution for NB-PUSCH Resource Allocation.

The U.S. Patent Application US 2007/217362 A1 describes a technical solution for an amended control for Resource Allocation in a Radio Access Network.

The U.S. Patent Application US2015/256308 A1 discloses systems and methods for OFDM with Flexible Subcarrier Spacing and Symbol Duration.

<u>**Summary**</u>

The embodiments of the present disclosure provide a resource scheduling method, apparatus and system to at least solve the problem that resource scheduling methods in related technologies cannot meet the network requirement in the related art.

According to an embodiment of the present disclosure, there is provided a resource scheduling method, which may include the following operations: radio baseband and Radio Frequency (RF) capabilities supported by a specified User Equipment (UE) are determined; a parameter value of a service traffic parameter corresponding to a to-be-processed service of a UE in a preset network element is acquired, wherein the service traffic parameter is used for representing a data volume required to be sent via an air interface within preset time in order to transmit the to-be-processed service; a Radio Scheduling Element (RSE) used for performing resource scheduling for the specified UE is determined according to the determined radio baseband and RF capabilities as well as the acquired parameter value, wherein the RSE is a Resource Block (RB) having a changeable carrier span and carrier quantity and/or having a changeable time-domain symbol length and time-domain symbol quantity; and the resource scheduling is performed for the specified UE according to the determined RSE.

In at least one exemplary embodiment, the operation that the parameter value of the service traffic parameter corresponding to the to-be-processed service of the UE in the preset network element is acquired may include the following operations. Each service in the to-be-processed service is extracted respectively, and a value $(T_r, B_r)$ of a parameter 2-tuple $(T, B)$ corresponding to each service is determined, wherein the parameter 2-tuple $(T, B)$ is used for representing that B bits of data are required to be sent via the air interface within time T in order to transmit the service, r is an integer in an interval from 0 to a preset value, and the preset value is the number of DL and UL services of the UE in the preset network element. The parameter value of the service traffic parameter is acquired according to the determined value $(T_r, B_r)$ of the parameter 2-tuple $(T, B)$.

In at least one exemplary embodiment, the operation that the RSE used for performing the resource scheduling for the specified UE is determined according to the determined radio baseband and RF capabilities as well as the acquired parameter value may include the following operations. An RSE set of the preset network element is determined according to the determined radio baseband and RF capabilities as well as the acquired parameter value. One or more RSEs used for performing the resource scheduling for the specified UE are selected from the RSE set.

In at least one exemplary embodiment, the operation that one or more RSEs used for performing the resource scheduling for the specified UE are selected from the RSE set may include the following operations. An RSE sub-set of the RSE set is determined, wherein the RSE sub-set is a set composed of RSEs, except for RSEs already allocated to a UE before the specified UE, in the RSE set. According to a parameter value of a service traffic parameter corresponding to a to-be-processed service of the specified UE, one or more RSEs used for performing the resource scheduling for the specified UE are sequentially selected from the RSE sub-set in an ascending sequence of physical resource occupation size of the RSEs.

In at least one exemplary embodiment, the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

In at least one exemplary embodiment, the RSE is determined based on the following parameters: a frequency domain resource parameter for allocating a frequency domain resource, and a time domain resource parameter for allocating a time domain resource, wherein the frequency domain resource parameter includes: a single carrier span parameter for adjusting a carrier span, and a carrier number parameter for indicating a quantity of carriers, and the time domain resource parameter includes: a time domain single-symbol span for adjusting a length of a time domain symbol, and a symbol number parameter for indicating a quantity of time domain symbols.

In at least one exemplary embodiment, the radio baseband and RF capabilities include at least one of the followings: LTE FDD, LTE TDD, 5G or Narrow Band Internet of Things (NBiot).

According to another embodiment of the present disclosure, there is provided a resource scheduling apparatus, which may include: a first determination module, configured to determine radio baseband and RF capabilities supported by a specified UE; an acquisition module, configured to acquire a parameter value of a service traffic parameter corresponding to a to-be-processed service of a UE in a preset network element, wherein the service traffic parameter is used for representing a data volume required to be sent via an air interface within preset time in order to transmit the to-be-processed service; a second determination module, configured to determine, according to the determined radio baseband and RF capabilities as well as the acquired parameter value, an RSE used for performing resource scheduling for the specified UE, wherein the RSE is an RB having a changeable carrier span and carrier quantity and/or having a changeable time-domain symbol length and time-domain symbol quantity; and a scheduling module, configured to perform the resource scheduling for the specified UE according to the determined RSE.

In at least one exemplary embodiment, the acquisition module is further configured to extract each service in the to-be-processed service respectively, and determine a value $(T_r, B_r)$ of a parameter 2-tuple $(T, B)$ corresponding to each service, wherein the parameter 2-tuple $(T, B)$ is used for representing that B bits of data are required to be sent via the air interface within time T in order to transmit the service, r is an integer in an interval from 0 to a preset value, and the preset value is the number of DL and UL services of the UE in the preset network element; and acquire the parameter value of the service traffic parameter according to the determined value $(T_r, B_r)$ of the parameter 2-tuple $(T, B)$.

In at least one exemplary embodiment, the acquisition module may include: a determination unit, configured to determine an RSE set of the preset network element according to the determined radio baseband and RF capabilities as well as the acquired parameter value; and a selection unit, configured to select from the RSE set one or more RSEs used for performing the resource scheduling for the specified UE.

In at least one exemplary embodiment, the selection unit is further configured to determine an RSE sub-set of the RSE set, wherein the RSE sub-set is a set composed of RSEs, except for RSEs already allocated to a UE before the specified UE, in the RSE set; and sequentially select, from the RSE sub-set according to a parameter value of a service traffic parameter corresponding to a to-be-processed service of the specified UE, one or more RSEs used for performing the resource scheduling for the specified UE according to an ascending sequence of physical resource occupation size of the RSEs.

According to still another embodiment of the present disclosure, there is further provided a resource scheduling system, which may include: the foregoing any resource scheduling apparatus.

According to still another embodiment of the present disclosure, there is further provided a storage medium, which may include a stored program, wherein the program executes the foregoing any method when being run. The storage medium is configured to store a program code for execute the following operations: radio baseband and RF capabilities supported by a specified UE are determined; a parameter value of a service traffic parameter corresponding to a to-be-processed service of a UE in a preset network element is acquired, wherein the service traffic parameter is used for representing a data volume required to be sent via an air interface within preset time in order to transmit the to-be-processed service; an RSE used for performing resource scheduling for the specified UE is determined according to the determined radio baseband and RF capabilities as well as the acquired parameter value, wherein the RSE is an RB having a changeable carrier span and carrier quantity and/or having a changeable time-domain symbol length and time-domain symbol quantity; and the resource scheduling is performed for the specified UE according to the determined RSE.

In at least one exemplary embodiment, the storage medium is further configured to store a program code for executing the following operations. The operation that the parameter value of the service traffic parameter corresponding to the to-be-processed service of the UE in the preset network element is acquired may include the following operations. Each service in the to-be-processed service is extracted respectively, and a value $(T_r, B_r)$ of a parameter 2-tuple $(T,B)$ corresponding to each service is determined, wherein the parameter 2-tuple $(T,B)$ is used for representing that B bits of data are required to be sent via the air interface within time T in order to transmit the service, r is an integer in an interval from 0 to a preset value, and the preset value is the number of DL and UL services of the UE in the preset network element. The parameter value of the service traffic parameter is acquired according to the determined value $(T_r, B_r)$ of the parameter 2-tuple $(T,B)$.

In at least one exemplary embodiment, the storage medium is further configured to store a program code for executing the following operations. The operation that the RSE used for performing the resource scheduling for the specified UE is determined according to the determined radio baseband and RF capabilities as well as the acquired parameter value may include the following operations. An RSE set of the preset network element is determined according to the determined radio baseband and RF capabilities as well as the acquired parameter value. One or more RSEs used for performing the resource scheduling for the specified UE are selected from the RSE set.

In at least one exemplary embodiment, the storage medium is further configured to store a program code for executing the following operations. The operation that one or more RSEs used for performing the resource scheduling for the specified UE are selected from the RSE set may include the following operations. An RSE sub-set of the RSE set is determined, wherein the RSE sub-set is a set composed of RSEs, except for RSEs already allocated to a UE before the specified UE, in the RSE set. According to a parameter value of a service traffic parameter corresponding to a to-be-processed service of the specified UE, one or more RSEs used for performing the resource scheduling for the specified UE are sequentially selected from the RSE sub-set in an ascending sequence of physical resource occupation size of the RSEs.

In at least one exemplary embodiment, the storage medium is further configured to store a program code for executing the following operations. The determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

In at least one exemplary embodiment, the storage medium is further configured to store a program code for executing the following operations. The RSE is determined based on the following parameters: a frequency domain resource parameter for allocating a frequency domain resource, and a time domain resource parameter for allocating a time domain resource, wherein the frequency domain resource parameter includes: a single carrier span parameter for adjusting a carrier span, and a carrier number parameter for indicating a quantity of carriers, and the time domain resource parameter includes: a time domain single-symbol span for adjusting a length of a time domain symbol, and a symbol number parameter for indicating a quantity of time domain symbols.

In at least one exemplary embodiment, the storage medium is further configured to store a program code for executing the following operations. The radio baseband and RF capabilities include at least one of the followings: LTE FDD, LTE TDD, 5G or NBiot.

According to still another embodiment of the present disclosure, there is further provided a processor. The processor is configured to run a program, wherein the program executes the foregoing any method when being run.

With the present disclosure, since the to-be-processed service is abstracted and converted into a data volume (i.e., the foregoing service traffic parameter) of data sent by the air interface within corresponding preset time, and resource blocks (i.e., the RSEs) having changeable carrier span and carrier quantity and/or changeable time domain symbol length and number are designed. According to the radio baseband and RF capabilities supported by the UE as well as the parameter value corresponding to the to-be-processed service, the RSE used for performing resource scheduling for the UE is determined, different radio baseband and RF capabilities may be unified and the dynamic control for time and frequency domain (time domain and frequency domain) resources is achieved. Therefore, the problem that resource scheduling methods in related technologies cannot meet the network requirement in the related art may be solved, and the effect of dynamically controlling the time and frequency domain resources is achieved.

**Brief Description of the Drawings**

The accompanying drawings are described here to provide deeper understanding of the present disclosure, and form a part of the present disclosure. The schematic embodiments and description of the present disclosure are adopted to explain the present disclosure, and do not form improper limits to the present disclosure. In the drawings:

Fig. 1 illustrates a block diagram of a hardware structure of a base station of a resource scheduling method according to an embodiment of the present disclosure;

Fig. 2 illustrates a flowchart diagram of a resource scheduling method according to an embodiment of the present disclosure;

Fig. 3 illustrates a flowchart diagram of a time-frequency hybrid duplexing resource scheduling method according to an exemplary embodiment of the present disclosure;

Fig. 4 illustrates a schematic diagram of an RSE design of a time-frequency hybrid duplexing resource scheduling method according to an exemplary embodiment of the present disclosure;

Fig. 5 illustrates a schematic diagram showing an LTE RB degenerated from an RSE in a time-frequency hybrid duplexing resource scheduling method according to an exemplary embodiment of the present disclosure;

Fig. 6 illustrates a schematic diagram of a resource allocation result of a time-frequency hybrid duplexing resource scheduling method according to an exemplary embodiment of the present disclosure;

Fig. 7 illustrates a schematic diagram of an LTE TDD frame structure according to an exemplary embodiment of the present disclosure;

Fig. 8 illustrates a schematic diagram of an LTE resource allocation compatible to an LTE TDD time-frequency hybrid duplexing resource scheduling method according to an exemplary embodiment of the present disclosure;

Fig. 9 illustrates a schematic diagram of an LTE FDD frame structure according to an exemplary embodiment of the present disclosure;

Fig. 10 illustrates a structural block diagram of a time-frequency hybrid duplexing resource scheduling system according to an exemplary embodiment of the present disclosure;

Fig. 11 is a structural block diagram of a resource scheduling apparatus according to an embodiment of the present disclosure; and

Fig. 12 is a schematic diagram of a resource scheduling system according to the present disclosure.

**Detailed Description of the Embodiments**

The present disclosure is described below with reference to the drawings and embodiments in detail. It should be noted that the embodiments of the present application and the characteristics of the embodiments may be combined with each other if there is no conflict.

It should be noted that, terminologies such as "first" and "second" in the specification, claims and accompanying drawings of the present disclosure are only used to distinguish similar objects, rather than to describe a special order or a precedence order.

First embodiment

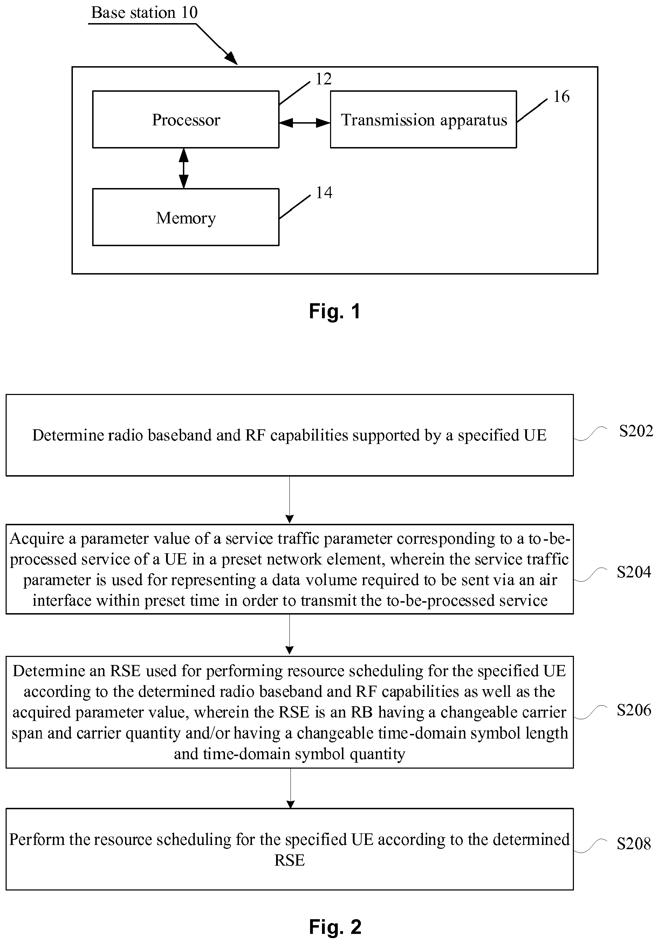

The method embodiment provided by the first embodiment of the present disclosure may be executed in a base station, a computer terminal or a similar network side device. For example, the method is run on the base station. Fig. 1 illustrates a block diagram of a hardware structure of a base station of a resource scheduling method according to an embodiment of the present disclosure. As illustrated in Fig. 1, the base station 10 may include one or more (only one is shown in the figure) processors 12 (each of the processors 12 may include but not limited to a processing apparatus such as a Microprogrammed Control Unit (MCU) or a Field Programmable Gate Array (FPGA)), a memory 14 configured to store data, and a transmission apparatus 16 for a communication function. It may be understood by a person of ordinary skill in the art that the structure shown in Fig. 1 is merely schematic and is not intended to form a limit to the structure of the above electronic apparatus. For example, the base station 10 may further include more or fewer assemblies than Fig. 1, or have a different configuration from Fig. 1.

The memory 14 may be configured to store a software program and module of application software, such as a program instruction/module corresponding to the resource scheduling method in this embodiment of the present disclosure. The processor 12 executes various functional applications and data processing, i.e., implements the above method, by running the software program and module stored in the memory 14. The memory 14 may include a high-speed Random Access Memory (RAM) and may further include a non-volatile memory such as one or more magnetic storage apparatuses, a flash memory or other non-volatile solid memories. In some examples, the memory 14 may further include a memory disposed remotely relative to the processor 12, and the remote memory may be connected to the base station 10 via a network. Examples of the above network include but not limited to an internet, an intranet, a local area network, a mobile communication network and a combination thereof.

The transmission apparatus 16 is configured to receive or send data via a network. Examples of the above network may include a wireless network provided by a communication supplier of the base station 10. In one example, the transmission apparatus 16 includes a Network Interface Controller (abbreviated as NIC), which may be connected to other network devices via the base station to communicate with the internet. In one example, the transmission apparatus 16 may be a Radio Frequency (abbreviated as RF) module, which communicates with the internet in a wireless manner.

There is provided a resource scheduling method run on the base station in this embodiment. Fig. 2 illustrates a flowchart diagram of a resource scheduling method according to an embodiment of the present disclosure. As illustrated in Fig. 2, the process may include the following operations S202 to S208.

In operation S202, radio baseband and RF capabilities supported by a specified UE are determined.

In operation S204, a parameter value of a service traffic parameter corresponding to a to-be-processed service of a UE in a preset network element is acquired, wherein the service traffic parameter is used for representing a data volume required to be sent via an air interface within preset time in order to transmit the to-be-processed service.

In operation S206, an RSE used for performing resource scheduling for the specified UE is determined according to the determined radio baseband and RF capabilities as well as the acquired parameter value, wherein the RSE is an RB having a changeable carrier span and carrier quantity and/or having a changeable time-domain symbol length and time-domain symbol quantity.

In operation S208, the resource scheduling is performed for the specified UE according to the determined RSE.

With the above operations, based on the radio baseband and RF capabilities supported by the UE as well as the parameter value corresponding to the to-be-processed service, the RB used for resource scheduling for the UE and having a changeable carrier span and carrier quantity and/or having a changeable time-domain symbol length and time-domain symbol quantity is determined. Therefore, the problem that resource scheduling methods in related technologies cannot meet the network requirement in the related art is solved, and the effect of dynamically controlling the time and frequency domain resources is achieved.

In at least one exemplary embodiment, the execution device for the above operations may be, but is not limited to be, a base station or other network side devices and the like.

In at least one exemplary embodiment, the above parameter value may be acquired by adopting the following manners. Each service in the to-be-processed service may be extracted respectively, and a value ($T_r,B_r$) of a parameter 2-tuple ($T,B$) corresponding to each service is determined, wherein the parameter 2-tuple ($T,B$) is used for representing that B bits of data are required to be sent via the air interface within time T in order to transmit the service,

$$r = 0, 1, 2, \ldots, \sum_{i=0}^{u} UE_i * (DL_i + UL_i),$$

the u is the number of to-be-processed UEs, and the $DL_i$ and $UL_i$ respectively represent the numbers of DL and UL services included in an $i^{th}$ to-be-processed UE. The parameter value of the service traffic parameter is acquired according to the determined value ($T_r,B_r$) of the parameter 2-tuple ($T,B$). The extraction herein is to abstract and extract the service, so that the various types of services are uniformly represented as digital characteristics.

In at least one exemplary embodiment, the RSE used for performing the resource scheduling for the specified UE may be determined by adopting the following manners. An RSE set of the preset network element may be determined according to the determined radio baseband and RF capabilities as well as the acquired parameter value. One or more RSEs used for performing the resource scheduling for the specified UE are selected from the RSE set. For example, in a case where the specified UE is an LTE FDD UE, an LTE TDD UE or a 5G UE, the RSE set may include only one element. The carrier span and the time domain symbol length of the RSE are set to be the same as an LTE Resource Block (abbreviated as RB) in the related art to be compatible with a related LTE FDD/TDD technology. In a case where the specified UE is the other novel UE, an available RSE set may be determined, and one or more RSEs used for performing the resource scheduling for the specified UE are determined from the RSE set.

In at least one exemplary embodiment, the one or more RSEs used for performing the resource scheduling for the specified UE may be selected from the RSE set via multiple manners. For example, any RSE meeting the transmission requirement of the to-be-processed service may be selected from an RSE sub-set according to the parameter value of the service traffic parameter corresponding to the to-be-processed service of the specified UE, wherein the RSE sub-set is a set composed of RSEs, except for RSEs already allocated to a UE before the specified UE, in the RSE set. As another example, according to the parameter value of the service traffic parameter corresponding to the to-be-processed service of the specified UE, one or more RSEs used for performing the resource scheduling for the specified UE may be sequentially selected from the RSE sub-set in an ascending sequence of physical resource occupation size of the RSEs. The physical resource occupation size refers to an area of occupied time and frequency domain resources.

In at least one exemplary embodiment, the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

In at least one exemplary embodiment, the RSE may be determined based on two types of parameters. One is a frequency domain resource parameter for allocating a frequency domain resource, and the other is a time domain resource parameter for allocating a time domain resource. The frequency domain resource parameter includes: a single carrier span parameter for adjusting a carrier span, and a carrier number parameter for indicating a quantity of carriers. The time domain resource parameter includes: a time domain single-symbol span for adjusting a length of a time domain symbol, and a symbol number parameter for indicating a quantity of time domain symbols. For example, the RSE may be defined into a form of the following quadruple (4-tuple) group: $(Fs,Ts,C,R)$ denoted as $RSE_{ij}:(Fs_i,Ts_j,C_i,R_j)$. The meanings and relationships of the $Fs_i$, $Ts_j$, $C_i$, and $R_j$ are as follows: the $RSE_{ij}$ includes $C_i$ carriers in a frequency domain, and the single-carrier span is $Fs_i$ unit (the unit may be Hz); the $RSE_{ij}$ includes $R_j$ symbols in a time domain and the single-symbol span is $Ts_j$ unit (the unit may be second), the C and the R are an integer greater than 0, and the $Fs_i$ and the $Ts_j$ are a real number greater than 0; and i=1,2...m; j=1,2...n, where the m is a carrier span type supported by the system, and the n is a symbol span type supported by the system.

In at least one exemplary embodiment, the radio baseband and RF capabilities include at least one of the followings: LTE FDD, LTE TDD, 5G or NBiot. The same UE may support multiple different radio baseband and RF capabilities; and in such a case, the RSE may be determined according to a negotiation or according to a demand of a service type.

Based on the above embodiment and optional implementation manners, in order to describe the whole interaction process of the scheme, in an exemplary embodiment, there is provided a time-frequency hybrid duplexing resource scheduling method and system. With the adoption of a scalable time-frequency scheduling span, the flexible selection between the TDD and the FDD is implemented. According to the capabilities (4G TDD/FDD and the like) of a terminal and service requirements of a UE, the time-frequency domain granularity and resource are selectively adaptively to implement the compatibility between the TDD and the FDD; and through the service requirement abstraction and system matching of the UE, the service and control separation are implemented, thus providing a necessary basis for the video granularity and resource allocation.

The time-frequency hybrid duplexing resource scheduling method provided in the optional embodiment of the present disclosure may include the following operations.

In operation 1, a system RSE is designed and initialized.

It is assumed that the system bandwidth is M (the unit may be Hz), and the system supports m carrier spans (widths) and n symbol spans (widths) in total.

The Radio Scheduling Element (abbreviated as RSE) is defined as a quadruple group $(Fs,Ts,C,R)$ denoted as $RSE_{ij}:(Fs_i,Ts_j,C_i,R_j)$. The meanings and relationships of the $Fs_i$, $Ts_j$, $C_i$ and $R_j$ are as follows: the $RSE_{ij}$ includes $C_i$ carriers in a frequency domain, and the single-carrier span is $Fs_i$ unit (the unit may be Hz), the $RSE_{ij}$ includes $R_j$ symbols in a time domain and the single-symbol span is $Ts_j$ unit (the unit may be second), the C and the R are an integer greater than 0, and the $Fs_i$ and the $Ts_j$ are a real number greater than 0; and i=1,2...m, j=1,2...n.

With the selection and control on the $Fs_i$, the carrier span is zoomed dynamically. With the selection and control on the $Ts_j$, the time domain symbol length is zoomed dynamically. By selecting different values of the $Fs_i$, $Ts_j$, $C_i$ and $R_j$, the time domain and frequency domain are dynamically controlled.

In operation 2, a UE type is identified, and UE service characteristics are abstracted and extracted.

The system identifies the type of the UE according to a capability report from the UE. Specifically, UEs are classified into an LTE FDD UE, an LTE TDD UE, a 5G UE or other novel UE according to the capabilities of the UE.

The system abstracts and extracts the UE service characteristics of the UE according to a network high-level reached service and a UE reported service. In other words, various types of services are unified into uniform digital characteristics, i.e., all service states of all UEs are acquired.

It is defined that the abstraction result for each service of each UE is $TB_r$, and the $TB_r$ is a 2-tuple $(T_r,B_r)$. The $(T_r,B_r)$ represents that the service requires to send $B_r$ bits data via the air interface within $T_r$ seconds, where

$$\text{r} = 0,1,2,\ldots,\sum_{i=0}^{u} UE_i * (DL_i + UL_i)$$

The u is the number of to-be-processed UEs, and the $DL_i$ and the $UL_i$ respectively indicate the number of DL and UL services included in an $i^{th}$ UE.

In operation 3, the system selects an available RSE set according to the determined UE type and service characteristics.

By selecting the values of the $Fs_i$, $Ts_j$, $C_i$ and $R_j$, the compatibility to an LTE resource allocation unit may be implemented, i.e., it is assumed that $Fs_i$=LTE carrier span, $Ts_j$=LTE symbol span, $C_i$=the number of OFDM symbols included in a single LTE RB and $R_j$ =sub-carrier span included in a single LTE RB, then $RSU_k = LTE\_RB,$ and the operation ends.

For the 5G and other novel UE, according to $TB_r$: $(T_r, B_r)$, the $Fs_i$, $Ts_j$, $C_i$, and $R_j$ are selected and the RSE is determined. The selection principle may be as follows: more UE service requirements are met as much as possible, the maximum of user satisfaction is pursued, and more $TB_r$: $(T_r, B_r)$ is met as much as possible. The selection principle may further be as follows: the requirement of a UE having a high priority and/or a service having a high priority is met as much as possible.

If the system bandwidth is sufficient, all $TB_r$: $(T_r, B_r)$ should be met, i.e., an available RSE set composed of $Fs_i$, $Ts_j$, $C_i$ and $R_j$ in the following inequation set is met:

$$\begin{cases} \sum_{i=1}^{r} Fs_i * C_i \leq M \\ Ts_j * R_j \leq T_j, j \in \{1,2,3,..., \sum_{i=1}^{u} UE_i * (DL_i + UL_i)\} \end{cases}$$

If the system bandwidth is insufficient, it is assumed that the service requirements of u1 UEs may be met at most, the $Fs_i$, $Ts_j$, $C_i$, $R_j$ and u1 should meet the following inequation set:

$$\begin{cases} \sum_{i=1}^{r} Fs_i * C_i \leq M \\ Ts_j * R_j \leq T_j, j \in \{1,2,3,..., \sum_{i=1}^{u1} UE_i * (DL_i + UL_i)\} \end{cases}$$

The RSE set is determined by the values of the $Fs_i$, $Ts_j$, $C_i$, $R_j$.

In operation 4, the system generates a final scheduling result and outputs the final scheduling result.

The specifications of RSEs, number of RSEs and position distribution of RSEs in each UE are determined.

First of all, the specifications of the RSEs are determined.

RSEs that are as small as possible may be selected in the RSE set provided in the operation 3. By increasing the number of the RSEs, the flexibility of distribution positions of the RSEs is increased. Such a manner can be adapted to uncontinuous distribution; and on the basis of meeting the service requirements of the UE, the spectrum resources are saved.

The RSEs that are as small as possible are selected, which refers to a result by multiplying four elements in the quadruple group $(Fs_i, Ts_j, C_i, R_j)$ is the minimum, i.e., $(Fs_i, Ts_j, C_i, R_j)$ when $Fs_i * Ts_j * C_i * R_j$ is minimum, where [*] represents multiplication.

For a single UE, different RSEs may be adopted by UL and DL services. On a same link (DL or UL) of the same UE, the same RSE needs to be adopted by different services, or the same RSE is adopted by the single UE in single processing.

Then, the number and positions of the RSEs are determined.

The number N of the RSEs is a minimum N meeting an inequation:

$$B_r * T_r \leq N * Fs_i * Ts_j * C_i * R_j * Q_m.$$

The positions of the N RSEs may be distributed in a dispersed manner on the basis of meeting the $BT_r$ to acquire a diversity gain on the time and frequency domains.

The video hybrid duplexing resource scheduling method provided in the optional embodiment of the disclosure will be further described below in detail in combination with specific examples.

Example 1: compatibility to LTE TDD UE in the related art

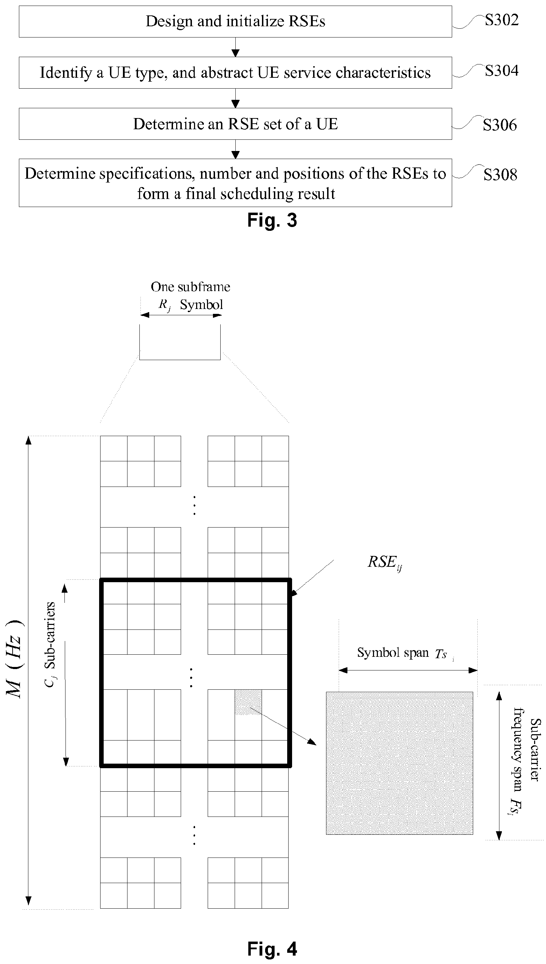

Fig. 3 illustrates a flowchart diagram of a time-frequency hybrid duplexing resource scheduling method according to an exemplary embodiment of the present disclosure. As illustrated in Fig. 3, the method may include the following operations.

In operation S302, system RSEs are designed and initialized.

It is assumed that the system bandwidth is M (the unit may be Hz), and the system supports m carrier spans (widths) and n symbol spans (widths) in total.

The RSE is defined as a quadruple group (*Fs,Ts,C,R*) denoted as $RSE_{ij}$ :($Fs_i, Ts_j, C_i, R_j$) (as shown in Fig. 4). The meanings and relationships of the $Fs_i$, $Ts_j$, $C_i$, and $R_j$ are as follows: the $RSE_{ij}$ includes $C_i$, carriers in a frequency domain, and the single-carrier span is $Fs_i$ unit (the unit may be Hz), the $RSE_{ij}$ includes $R_j$ symbols in a time domain and the single-symbol span is $Ts_j$ unit (the unit may be second), the C and the R are an integer greater than 0, and the $Fs_i$ and the $Ts_j$ are a real number greater than 0; and i=1,2...m, j=1,2...n.

With the selection and control on the $Fs_i$, the carrier span is zoomed dynamically. With the selection and control on the $Ts_j$, the time domain symbol length is zoomed dynamically. By selecting different values of the $Fs_i$, $Ts_j$, $C_i$ and $R_j$, the time domain and frequency domain are dynamically controlled.

In operation S304, a UE type is identified, and UE service characteristics are abstracted and extracted.

The system identifies the type of the UE according to a capability report from the UE. Specifically, UEs are classified into an LTE FDD UE, an LTE TDD UE, a 5G UE or other novel UE according to the capabilities of the UE.

The system abstracts and extracts the UE service characteristics of the UE according to a network high-level reached service and a UE reported service. In other words, various types of services are unified into uniform digital characteristics, i.e., all service states of all UEs are acquired.

It is defined that the abstraction result for each service of each UE is $TB_r$, and the $TB_r$ is a 2-tuple ($T_r,B_r$). The ($T_r,B_r$) represents that the service requires to send $B_r$ bits data via the air interface within $T_r$ seconds, where

$$r = 0, 1, 2, ..., \sum_{i=0}^{u} UE_i * (DL_i + UL_i),$$

the u is the number of to-be-processed UEs, and the $DL_i$ and the $UL_i$ respectively indicate the number of DL and UL services included in an ith UE.

In operation S306, the system selects an available RSE set according to the determined UE type and service characteristics.

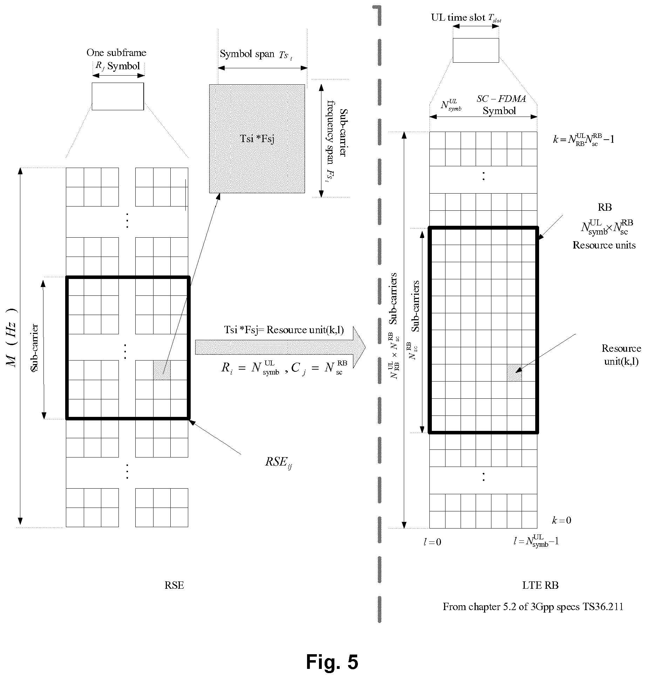

As shown in Fig. 5, for the LTE FDD UE and TDD UE, according to the foregoing identification result on the UE type, by selecting the values of the $Fs_i$, $Ts_j$, $C_i$ and $R_j$, the compatibility to an LTE resource allocation unit is achieved, i.e., it is assumed that $Fs_i$ =LTE carrier span, $Ts_j$ =LTE symbol span, $C_i$ =the number of OFDM symbols included in a single LTE RB and $R_j$ sub-carrier span included in a single LTE RB, then $RSE_k$ = $LTE\_RB$.

The TDD special subframe may be viewed as a combination of an UL subframe and a DL subframe having the number of symbols smaller than the conventional subframe. The number of symbols and symbol span may also be implemented via special values of the $Ts_j$ and $C_i$.

The operation ends.

In operation S308, the system generates a final scheduling result and outputs the final scheduling result.

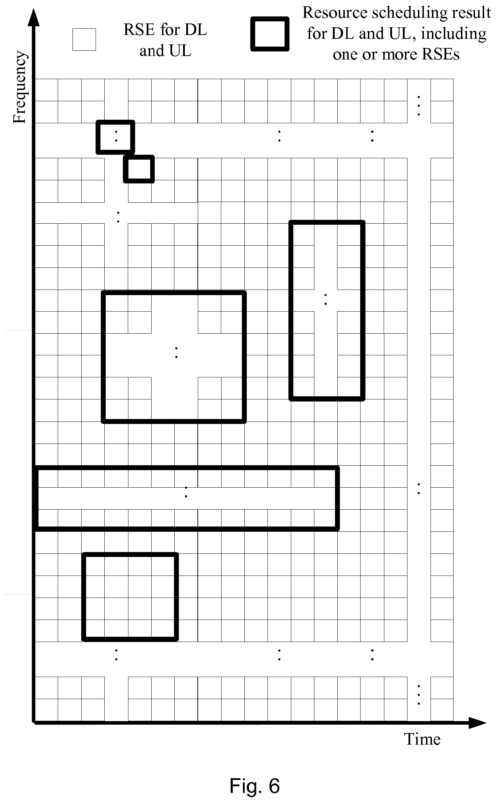

The system generates the final scheduling result, and outputs the final total resource allocation result (as shown in Fig. 6).

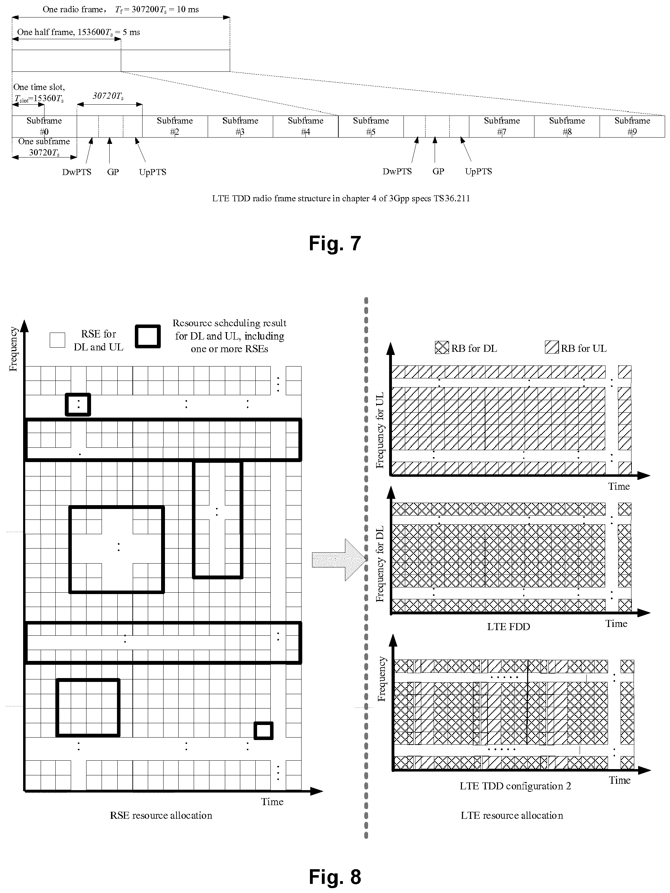

The result is as shown in table 1 in combination with Fig. 7 and Fig. 8.

Table 1 UL-DL matching table

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

With the special resource allocation form (quadruple group) of the optional embodiment of the present disclosure, the TDD wireless frame structure in the LTE is implemented and the full compatibility to a forward technology is achieved, which is specifically described as follows.

For an LTE TDD UE, a virtual bandwidth and a virtual UL-DL subframe are dynamically divided within a spectral range supported by the UE. The virtual bandwidth and the virtual UL-DL subframes are divided by taking the $RSE_k$ determined in the above operation as a unit.

The division of the virtual bandwidth and the virtual UL-DL subframe is to divide when it is necessary for the UE. The bandwidth is divided to be shared by all UEs. The unused bandwidths are used as required by the UEs in the virtual bandwidth according to the processing priority. The resource allocated completely is marked as an occupied state, and the bandwidth in the occupied state cannot be allocated to other UEs.

Upon this, with the resource allocation manner of the existing LTE TDD, the allocation of the UE resource may be implemented, and this example ends.

Example 2: compatibility to LTE FDD UE in the related art

The operation S302 to the operation S304 are the same as the first example.

In operation S306, the system selects an available RSE set according to UE type and service characteristics.

As shown in Fig. 5, for the LTE FDD UE, according to the foregoing identification result on the UE type, by selecting the values of the $Fs_i$, $Ts_j$, $C_i$ and $R_j$, the compatibility to an LTE resource allocation unit is achieved, i.e., it is assumed that $Fs_i$=LTE carrier span, $Ts_j$ =LTE symbol span, $C_i$=the number of OFDM symbols included in a single LTE RB and $R_j$ = sub-carrier span included in a single LTE RB, then $RSE_k = LTE\_RB.$

In operation S308, the system generates a final scheduling result and outputs the final scheduling result.

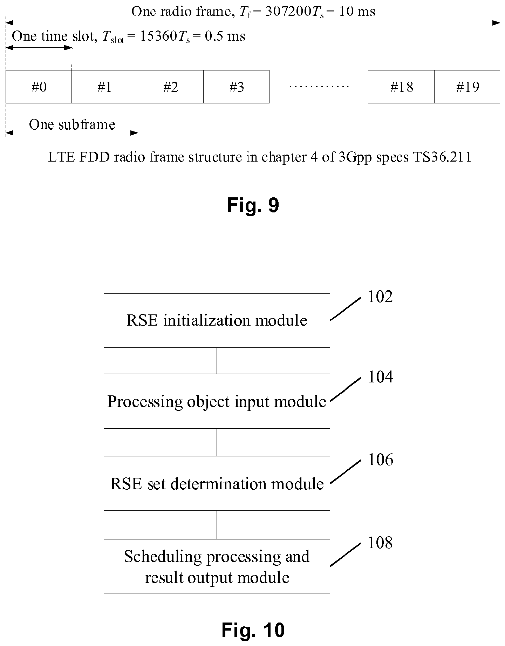

As shown in Fig. 8 and Fig. 9, with the special resource allocation form in this example, the FDD wireless frame structure in the LTE is implemented and the full compatibility to a forward technology is achieved, which is specifically described as follows.

For an LTE FDD UE, a virtual bandwidth and a virtual UL-DL subframe are dynamically divided within a spectral range supported by the UE. The virtual bandwidth and the virtual UL-DL subframes are divided by taking the $RSE_k$ determined in the above operation as a unit.

The dynamic division of the virtual bandwidth is to divide when it is necessary for the UE. The bandwidth is divided to be shared by all UEs. The unused bandwidths are used as required by the UEs in the virtual bandwidth according to the processing priority. The resource allocated completely is marked as an occupied state, and the bandwidth in the occupied state cannot be allocated to other UEs.

Upon this, with the resource allocation manner of the existing LTE FDD, the allocation of the UE resource may be implemented, and this example ends.

Example 3: compatibility to other related art such as NBiot

The operation S302 to the operation S304 are the same as the first example.

In operation S306, the system selects an available RSE set according to UE type and service characteristics.

In this example, by selecting the values of the $Fs_i$, $Ts_j$, $C_i$, and $R_j$, the compatibility to other related art such as NBiot is achieved, i.e., it is assumed that $Fs_i$ =NBiot carrier span, $Ts_j$ =NBiot symbol span, $C_i$=the number of OFDM symbols included in an single NBiot RB and $R_j$ = sub-carrier span included in the single NBiot RB, then $RSE_k$ = NBiot_RB.

In operation S308, the system generates a final scheduling result and outputs the final scheduling result.

For an NBiot UE, virtual DL bandwidth and UL bandwidth are divided dynamically within a spectral range supported by the UE. The virtual bandwidth is divided and allocated by taking the $RSE_k$ determined in the above operation as a unit.

The dynamic division of the virtual bandwidth is to divide when it is necessary for the UE. The bandwidth is divided to be shared by all UEs. The unused bandwidths are used as required by the UEs in the virtual bandwidth according to the processing priority. The resource allocated completely is marked as an occupied state, and the bandwidth in the occupied state cannot be allocated to other UEs.

Upon this, with the resource allocation manner of the existing NBiot, the allocation of the UE resource may be implemented, and this example ends.

Example 4: processing for 5G and novel UE

The operation S302 to the operation S304 are the same as the first example.

In operation S306, the system selects an available RSE set according to UE type and service characteristics.

As shown in Fig. 5, for the LTE FDD UE and TDD UE, according to the foregoing identification result on the UE type, by selecting the values of the $Fs_i$, $Ts_j$, $C_i$ and $R_j$, the compatibility to an LTE resource allocation unit may be implemented, i.e., it is assumed that $Fs_i$ =LTE carrier span, $Ts_j$ =LTE symbol span, $C_i$ =the number of OFDM symbols included in a single LTE RB and $R_j$ =sub-carrier span included in a single LTE RB, then $RSE_k = LTE\_RB.$

For the 5G and other novel UE, according to $TB_r$ : $(T_r, B_r)$, the $Fs_i$, $Ts_j$, $C_i$ and $R_j$ are selected and the RSE is determined. The selection principle may be as follows: more UE service requirements are met as much as possible, the maximum of user satisfaction is pursued, and more $TB_r$: $(T_r, B_r)$ is met as much as possible. The selection principle may further be as follows: the requirement of a UE having a high priority and/or a service having a high priority is met as much as possible.

If the system bandwidth is sufficient, all $TB_r$: $(T_r, B_r)$ should be met, i.e., an available RSE set composed of $Fs_i$, $Ts_j$, $C_i$ and $R_j$ in the following inequation set is met:

$$\begin{cases} \sum_{i=1}^{r} Fs_i * C_i \leq M \\ Ts_j * R_j \leq T_j, j \in \{1,2,3,..., \sum_{i=1}^{u} UE_i * (DL_i + UL_i)\} \end{cases}$$

If the system bandwidth is insufficient, it is assumed that the service requirements of u1 UEs may be met at most, the $Fs_i$, $Ts_j$, $C_i$, $R_j$ and u1 should meet the following inequation set:

$$\begin{cases} \sum_{i=1}^{r} Fs_i * C_i \leq M \\ Ts_j * R_j \leq T_j, j \in \{1,2,3,..., \sum_{i=1}^{u1} UE_i * (DL_i + UL_i)\} \end{cases}$$

The RSE set is determined by the values of the $Fs_i$, $Ts_j$, $C_i$, $R_j$.

In operation S308, the system generates a final scheduling result and outputs the final scheduling result.

The specifications of RSEs, number of RSEs and position distribution of RSEs in each UE are determined.

First of all, the specifications of the RSEs are determined.

RSEs that are as small as possible may be selected in the RSE set provided in the operation 3. By increasing the number of the RSEs, the flexibility of distribution positions of the RSEs is increased. Such a manner can be adapted to uncontinuous distribution; and on the basis of meeting the service requirements of the UE, the spectrum resources are saved.

The RSEs that are as small as possible are selected, which refers to a result by multiplying four elements in the quadruple group $(Fs_i, Ts_j, C_i, R_j)$ is the minimum, i.e., $(Fs_i, Ts_j, C_i, R_j)$ when $Fs_i * Ts_j * C_i * R_j$ is minimum.

For a single UE, different RSEs may be adopted by UL and DL services. On a same link (DL or UL) of the same UE, the same RSE needs to be adopted by different services, or the same RSE is adopted by the single UE in single processing.

Then, the number and positions of the RSEs are determined.

The number N of the RSEs is a minimum N meeting an inequation:

$$B_r * T_r \leq N * Fs_i * Ts_j * C_i * R_j * Q_m.$$

The positions of the N RSEs may be distributed in a dispersed manner on the basis of meeting the $BT_r$ to acquire a diversity gain on the time and frequency domains.

Example 5: processing for a scenario in which multiple types coexist

Operation S302 to operation S304 are the same as the first example.

Operation S306 is the same as the fourth example.

In operation S308, the system generates a final scheduling result and outputs the final scheduling result.

For the LTE FDD/TDD UE and NBiot/eMTC UE, it is common that the supported bandwidth is limited or the occupation is fewer than the 5G UE, and the more restrictions are imposed to select the RSE. The priority is given to determine the specifications and positions of the RSEs for the above UEs and the others are the same as the fourth example.

A time-frequency hybrid duplexing resource scheduling system provided in an exemplary embodiment of the present disclosure will be described below in combination with specific examples.

Example 6: time-frequency hybrid duplexing resource scheduling system

Fig. 10 illustrates a structural block diagram of a time-frequency hybrid duplexing resource scheduling system according to an exemplary embodiment of the present disclosure. As illustrated in Fig. 10, the system may include an RSE initialization module 102, a processing object input module 104, an RSE set determination module 106 and a scheduling processing and result output module 108.

The RSE initialization module 102 is configured to initialize a system RSE.

The RSE initialization module 102 may be configured to generate an RSE set supported by the system and design the RSE.

It is assumed that the system bandwidth is M (the unit may be Hz), and the system supports m carrier spans (widths) and n symbol spans (widths) in total.

The RSE is defined as a quadruple group $(Fs,Ts,C,R)$ denoted as $RSE_{ij}$:$(Fs_i, Ts_j, C_i, R_j)$. The meanings and relationships of the $Fs_i$, $Ts_j$, $C_i$, and $R_j$ are as follows: the $RSE_{ij}$ includes $C_i$ carriers in a frequency domain, and the single-carrier span is $Fs_i$ unit (the unit may be Hz), the $RSE_{ij}$ includes $R_j$ symbols in a time domain and the single-symbol span is $Ts_j$ unit (the unit may be second), the C and the R are an integer greater than 0, and the $Fs_i$ and the $Ts_j$ are a real number greater than 0; and i=1,2...m, j=1,2...n.

With the selection and control on the $Fs_i$, the carrier span is zoomed dynamically; with the selection and control on the $Ts_j$, the time domain symbol length is zoomed dynamically; and by selecting different values of the $Fs_i$, $Ts_j$, $C_i$ and $R_j$, the time domain and frequency domain are dynamically controlled.

The processing object input module 104 is configured to input a system processing object.

The system identifies the type of the UE according to a capability report from the UE. Specifically, UEs are classified into an LTE FDD UE, an LTE TDD UE, a 5G UE or other novel UE according to the capabilities of the UE.

The system abstracts and extracts the UE service characteristics of the UE according to a network high-level reached service and a UE reported service. In other words, various types of services are unified into uniform digital characteristics, i.e., all service states of all UEs are acquired.

It is defined that the abstraction result for each service of each UE is $TB_r$, and the $TB_r$ is a 2-tuple $(T_r, B_r)$. The $(T_r, B_r)$ represents that the service requires to send $B_r$ bits data via the air interface within $T_r$ seconds, where

$$r = 0, 1, 2, ..., \sum_{i=0}^{u} UE_i * (DL_i + UL_i),$$

the u is the number of to-be-processed UEs, and the $DL_i$ and the $UL_i$ respectively indicate the number of DL and UL services included in an ith UE.

The RSE set determination module 106 is configured to determine an RSE set.

For the LTE FDD UE and TDD UE, the identification result of the system for the UE type is as shown in Fig. 4.

By selecting the values of the $Fs_i$, $Ts_j$, $C_i$ and $R_j$, the compatibility of the system to an LTE resource allocation unit may be implemented, i.e., it is assumed that $Fs_i$ =LTE carrier span, $Ts_j$ =LTE symbol span, $C_i$ =the number of OFDM symbols included in a single LTE RB and $R_j$ =sub-carrier span included in a single LTE RB, then $RSU_k = LTE\_RB$.

For the 5G and other novel UE, according to $TB_r$:$(T_r, B_r)$, the $Fs_i$, $Ts_j$, $C_i$ and $R_j$ are selected and the RSE is determined. The selection principle may be as follows: more UE service requirements are met as much as possible, the maximum of user satisfaction is pursued, and more $TB_r$:$(T_r, B_r)$ is met as much as possible. The selection principle may further be as follows: the requirement of a UE having a high priority and/or a service having a high priority is met as much as possible.

If the system bandwidth is sufficient, all $TB_r$: $(T_r, B_r)$ should be met, i.e., an available RSE set composed of $Fs_i$, $Ts_j$, $C_i$ and $R_j$ in the following inequation set is met:

$$\begin{cases} \sum_{i=1}^{r} Fs_i * C_i \leq M \\ Ts_j * R_j \leq T_j, j \in \{1,2,3,...,\sum_{i=1}^{u} UE_i * (DL_i + UL_i)\} \end{cases}$$

If the system bandwidth is insufficient, it is assumed that the service requirements of u1 UEs may be met at most, the $Fs_i$, $Ts_j$, $C_i$, $R_j$ and u1 should meet the following inequation set:

$$\begin{cases} \displaystyle\sum_{i=1}^{r} Fs_i * C_i \le M \\ Ts_j * R_j \le T_j, j \in \{1,2,3,..., \displaystyle\sum_{i=1}^{u1} UE_i * (DL_i + UL_i)\} \end{cases}$$

The RSE set is determined by the values of the $Fs_i$, $Ts_j$, $C_i$, $R_j$.

The scheduling processing and result output module 108 is configured to determine the specifications of RSEs, number of RSEs and position distribution of RSEs in each UE.

First of all, the specifications of the RSEs are determined.

RSEs that are as small as possible may be selected in the RSE set provided by the RSE set determination module 106. By increasing the number of the RSEs, the flexibility of distribution positions of the RSEs is increased. Such a manner can be adapted to uncontinuous distribution; and on the basis of meeting the service requirements of the UE, the spectrum resources are saved.

The RSEs that are as small as possible are selected, which refers to a result by multiplying four elements in the quadruple group ($Fs_i, Ts_j, C_i, R_j$) is the minimum, i.e., ($Fs_i, Ts_j, C_i, R_j$) when $Fs_i*Ts_j*C_i*R_j$ is minimum.

For a single UE, different RSEs may be adopted by UL and DL services. On a same link (DL or UL) of the same UE, the same RSE needs to be adopted by different services, or the same RSE is adopted by the single UE in single processing.

Then, the number and positions of the RSEs are determined.

The number N of the RSEs is a minimum N meeting an inequation:

$$B_r * T_r \le N * Fs_i * Ts_j * C_i * R_j * Q_m.$$

The positions of the N RSEs may be distributed in a dispersed manner on the basis of meeting the $TB_r$ to acquire a diversity gain on the time and frequency domains.

A fixed UL and DL time sequence is adopted by the traditional TDD. For data receiving and transmitting, it is necessary to wait for a fixed opportunity and the processing timeliness is poor. The fixed UL and DL resource matching cannot be adapted to the flexibility of the service change, e.g., the service downloading has a large requirement for DL resources, the service uploading has a large requirement for UL resources and for services such as video call, the UL and DL resources are completely symmetric. The fixed resource matching of the TDD cannot be flexibly adapted to the diversity of a user behavior to cause the resource waste. For the traditional FDD, the receiving and transmitting may be performed simultaneously; however, with the manner that the UL and DL bandwidths are equal, there is also the diversity of the resources and user service behaviors to cause the resource waste.

With the above technical solutions in the optional embodiments of the present disclosure, the effective matching among the user service behavior, service requirement and system resource can be implemented, the TDD and the FDD are organically unified, the effective compatibility to the existing terminal is achieved, the differences among the UEs are effectively shielded, the flexible, dynamic and efficient matching and integration among the UE capability, service requirement and system resource are implemented, and the forward compatibility to a technology and a device is considered. Therefore, the requirements on 5G and future SDN technologies in the related art may be solved; and on the basis of being compatible to the related art, the network low-level difference is weakened, and the unification for multiple systems in radio communication is achieved.

Through the description of the preceding embodiments, a person skilled in the art may clearly understand that the present disclosure may be implemented by software plus a necessary universal hardware platform, and definitely may also be implemented by hardware, but in most cases, the former is a preferred implementation manner. Based on such understanding, the technical solutions of the present disclosure essentially, or the part contributing to the related art may be implemented in the form of a software product. The computer software product is stored in a storage medium (such as a ROM/RAM, a magnetic disk, or an optical disk) and includes several instructions for instructing a terminal device (which may be a mobile phone, a computer, a server, a network device, or the like) to execute the methods described in the embodiments of the present disclosure.

Second embodiment

In this embodiment, there is further provided a resource scheduling apparatus. The apparatus is configured to implement the above embodiment and optional implementation manners, and the contents that have been described will not be repeated. As used herein, the term "module" may implement a combination of software and/or hardware having a predetermined function. Although the apparatus described in the following embodiment is preferably implemented with software, it may also be conceivable to implement with hardware or a combination of software and hardware.

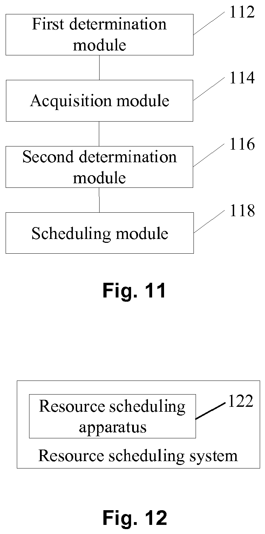

Fig. 11 is a structural block diagram of a resource scheduling apparatus according to an embodiment of the present disclosure. As illustrated in Fig. 11, the apparatus may include a first determination module 112, an acquisition module 114, a second determination module 116 and a scheduling module 118.

The first determination module 112 is configured to determine radio baseband and RF capabilities supported by a specified UE.

The acquisition module 114 is connected to the above first determination module 112, and is configured to acquire a parameter value of a service traffic parameter corresponding to a to-be-processed service of a UE in a preset network element, wherein the service traffic parameter is used for representing a data volume required to be sent via an air interface within preset time in order to transmit the to-be-processed service.

The second determination module 116 is connected to the above acquisition module 114 and is configured to determine, according to the determined radio baseband and RF capabilities as well as the acquired parameter value, an RSE used for performing resource scheduling for the specified UE, wherein the RSE is an RB having a changeable carrier span and carrier quantity and/or having a changeable time-domain symbol length and time-domain symbol quantity.

The scheduling module 118 is connected to the above second determination module 116 and is configured to perform the resource scheduling for the specified UE according to the determined RSE.

In at least one exemplary embodiment, the acquisition module 114 is further configured to extract each service in the to-be-processed service respectively, and determine a value ($T_r, B_r$) of a parameter 2-tuple ($T, B$) corresponding to each service, wherein the parameter 2-tuple ($T, B$) is used for representing that B bits of data are required to be sent via the air interface within time T in order to transmit the service, r is an integer in an interval from 0 to a preset value, and the preset value is the number of DL and UL services of the UE in the preset network element; and acquire the parameter value of the service traffic parameter according to the determined value ($T_r, B_r$) of the parameter 2-tuple ($T, B$).

In at least one exemplary embodiment, the acquisition module 114 may include: a determination unit, configured to determine an RSE set of the preset network element according to the determined radio baseband and RF capabilities as well as the acquired parameter value; and a selection unit, configured to select from the RSE set one or more RSEs used for performing the resource scheduling for the specified UE.

In at least one exemplary embodiment, the selection unit is further configured to determine an RSE sub-set of the RSE set, wherein the RSE sub-set is a set composed of RSEs, except for RSEs already allocated to a UE before the specified UE, in the RSE set; and sequentially select, from the RSE sub-set according to a parameter value of a service traffic parameter corresponding to a to-be-processed service of the specified UE, one or more RSEs used for performing the resource scheduling for the specified UE in an ascending sequence of physical resource occupation size of the RSEs.

It is to be noted that each of the above modules may be implemented by software or hardware. For the later, it may be implemented via the following manner but is not limited to this: the above modules are located in a same processor; or the above modules are respectively located in different processors in any combined form.

Third embodiment

In this embodiment, there is further provided a resource scheduling system. Fig. 12 is a schematic diagram of a resource scheduling system according to the present disclosure. As illustrated in Fig. 12, the resource scheduling system includes: the foregoing any resource scheduling apparatus 112.

Fourth embodiment

In this embodiment, there is further provided a storage medium. The storage medium includes a stored program, wherein the program executes the foregoing method when being run.

In at least one exemplary embodiment, in this embodiment, the storage medium may be configured to store a program code for executing the following operations.

At S1, radio baseband and RF capabilities supported by a specified UE are determined.

At S2, a parameter value of a service traffic parameter corresponding to a to-be-processed service of a UE in a preset network element is acquired, wherein the service traffic parameter is used for representing a data volume required to be sent via an air interface within preset time in order to transmit the to-be-processed service.

At S3, an RSE used for performing resource scheduling for the specified UE is determined according to the determined radio baseband and RF capabilities as well as the acquired parameter value, wherein the RSE is an RB having a changeable carrier span and carrier quantity and/or having a changeable time-domain symbol length and time-domain symbol quantity.

At S4, the resource scheduling is performed for the specified UE according to the determined RSE.

In at least one exemplary embodiment, the storage medium is further configured to store a program code for executing the following operations.

The operation that the parameter value of the service traffic parameter corresponding to the to-be-processed service of the UE in the preset network element is acquired may include the following operations.

At S1, each service in the to-be-processed service is extracted respectively, and a value ($T_r,B_r$) of a parameter 2-tuple ($T,B$) corresponding to each service is determined, wherein the parameter 2-tuple ($T,B$) is used for representing that B bits of data are required to be sent via the air interface within time T in order to transmit the service, r is an integer in an interval from 0 to a preset value, and the preset value is the number of DL and UL services of the UE in the preset network element.

At S2, the parameter value of the service traffic parameter is acquired according to the determined value ($T_r,B_r$) of the parameter 2-tuple ($T,B$).

In at least one exemplary embodiment, the storage medium is further configured to store a program code for executing the following operations.

The operation that the RSE used for performing the resource scheduling for the specified UE is determined according to the determined radio baseband and RF capabilities as well as the acquired parameter value may include the following operations.

At S1, an RSE set of the preset network element is determined according to the determined radio baseband and RF capabilities as well as the acquired parameter value.

At S2, one or more RSEs used for performing the resource scheduling for the specified UE are selected from the RSE set.

In at least one exemplary embodiment, the storage medium is further configured to store a program code for executing the following operations.

The operation that one or more RSEs used for performing the resource scheduling for the specified UE are selected from the RSE set may include the following operations.

At S1, an RSE sub-set of the RSE set is determined, wherein the RSE sub-set is a set composed of RSEs, except for RSEs already allocated to a UE before the specified UE, in the RSE set.

At S2, according to a parameter value of a service traffic parameter corresponding to a to-be-processed service of the specified UE, one or more RSEs used for performing the resource scheduling for the specified UE are sequentially selected from the RSE sub-set in an ascending sequence of physical resource occupation size of the RSEs.

In at least one exemplary embodiment, the storage medium is further configured to store a program code for executing the following operations: the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

In at least one exemplary embodiment, the storage medium is further configured to store a program code for executing the following operations: the RSE is determined based on the following parameters: a frequency domain resource parameter for allocating a frequency domain resource, and a time domain resource parameter for allocating a time domain resource; wherein the frequency domain resource parameter includes: a single carrier span parameter for adjusting a carrier span, and a carrier number parameter for indicating a quantity of carriers, and the time domain resource parameter includes: a time domain single-symbol span for adjusting a length of a time domain symbol, and a symbol number parameter for indicating a quantity of time domain symbols.

In at least one exemplary embodiment, the storage medium is further configured to store a program code for executing the following operations: the radio baseband and RF capabilities include at least one of the followings: LTE FDD, LTE TDD, 5G or NBiot.

In at least one exemplary embodiment, in this embodiment, the storage medium may include but not limited to: various media capable of storing the program code such as a U disk, a Read-Only Memory (ROM), a Random Access Memory (RAM), a mobile hard disk, a magnetic disk or an optical disc.

In at least one exemplary embodiment, in this embodiment, a processor executes the following operations according to the stored program code in the storage medium: radio baseband and RF capabilities supported by a specified UE are determined; a parameter value of a service traffic parameter corresponding to a to-be-processed service of a UE in a preset network element is acquired, wherein the service traffic parameter is used for representing a data volume required to be sent via an air interface within preset time in order to transmit the to-be-processed service; an RSE used for performing resource scheduling for the specified UE is determined according to the determined radio baseband and RF capabilities as well as the acquired parameter value, wherein the RSE is an RB having a changeable carrier span and carrier quantity and/or having a changeable time-domain symbol length and time-domain symbol quantity; and the resource scheduling is performed for the specified UE according to the determined RSE.

In at least one exemplary embodiment, in this embodiment, a processor executes the following operations

15

according to the stored program code in the storage medium: the operation that the parameter value of the service traffic parameter corresponding to the to-be-processed service of the UE in the preset network element is acquired may include the following operations: each service in the to-be-processed service is extracted respectively, and a value ($T_r$,$B_r$) of a parameter 2-tuple ($T$,$B$) corresponding to each service is determined, wherein the parameter 2-tuple ($T$,$B$) is used for representing that B bits of data are required to be sent via the air interface within time T in order to transmit the service, r is an integer in an interval from 0 to a preset value, and the preset value is the number of DL and UL services of the UE in the preset network element; and the parameter value of the service traffic parameter is acquired according to the determined value ($T_r$,$B_r$) of the parameter 2-tuple ($T$,$B$).

In at least one exemplary embodiment, in this embodiment, a processor executes the following operations according to the stored program code in the storage medium: the operation that the RSE used for performing the resource scheduling for the specified UE is determined according to the determined radio baseband and RF capabilities as well as the acquired parameter value may include the following operations: an RSE set of the preset network element is determined according to the determined radio baseband and RF capabilities as well as the acquired parameter value; and one or more RSEs used for performing the resource scheduling for the specified UE are selected from the RSE set.

In at least one exemplary embodiment, in this embodiment, a processor executes the following operations according to the stored program code in the storage medium: the operation that one or more RSEs used for performing the resource scheduling for the specified UE are selected from the RSE set may include the following operations: an RSE sub-set of the RSE set is determined, wherein the RSE sub-set is a set composed of RSEs, except for RSEs already allocated to a UE before the specified UE, in the RSE set; and according to a parameter value of a service traffic parameter corresponding to a to-be-processed service of the specified UE, one or more RSEs used for performing the resource scheduling for the specified UE are sequentially selected from the RSE sub-set in an ascending sequence of physical resource occupation size of the RSEs.

In at least one exemplary embodiment, in this embodiment, a processor executes the following operations according to the stored program code in the storage medium: the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

In at least one exemplary embodiment, in this embodiment, a processor executes the following operations according to the stored program code in the storage medium: the RSE is determined based on the following parameters: a frequency domain resource parameter for allocating a frequency domain resource, and a time domain resource parameter for allocating a time domain resource; wherein the frequency domain resource parameter includes: a single carrier span parameter for adjusting a carrier span, and a carrier number parameter for indicating a quantity of carriers, and the time domain resource parameter includes: a time domain single-symbol span for adjusting a length of a time domain symbol, and a symbol number parameter for indicating a quantity of time domain symbols.

In at least one exemplary embodiment, in this embodiment, a processor executes the following operations according to the stored program code in the storage medium: the radio baseband and RF capabilities include at least one of the followings: LTE FDD, LTE TDD, 5G or NBiot.

An embodiment of the present disclosure further provides a processor. The processor is configured to run a program, wherein the program executes the operations of the foregoing any method when being run.

In at least one exemplary embodiment, the specific examples in this embodiment may be referred to the examples described in the above embodiments and optional implementation manners, and will not be repeated in this embodiment.

Apparently, those skilled in the art should understand that, each of the above-mentioned module or operation of the present disclosure may be implemented through a universal computing device, for instance, they can be integrated on a signal computing device, or distributed on a network composed of a plurality of computing devices. Optically, each module or each operation may be implemented by using a computing device-executable program code, thus they can be stored in a storage device and executed by the computing device. Moreover, in some cases, the operations shown or described may be executed in a sequence different from the sequence herein. Or they are respectively fabricated into each integrated circuit module, or a plurality of modules or operations among them are fabricated into a single integrated circuit module for implementation. In this way, the present disclosure is not confined to any specific combination of hardware and software.

The foregoing merely describes optional embodiments of the present disclosure, and is not intended to limit the present disclosure. The person skilled in the art may make several improvements and modifications without departing from the principle of the present disclosure, and these improvements and modifications shall fall within the protection scope of the present disclosure.

**Industrial Applicability**

The present disclosure relates to the field of communication and provides a resource scheduling method, apparatus and system. Since the to-be-processed service is abstracted and converted into a data volume of data sent by the air interface within corresponding preset time, and the RB having the changeable carrier span and carrier quantity and/or time domain symbol length and number is designed, through the radio baseband and RF capabilities supported by the UE as well as the parameter value corresponding to the to-be-processed service, the RSE used for performing resource scheduling for the UE is determined, different radio baseband and RF capabilities may be unified and the dynamic control for time and frequency domain (time domain and frequency domain) resources is achieved. Therefore, the problem that resource scheduling methods in related technologies cannot meet the network requirement in the related art may be solved, and the effect of dynamically controlling the time and frequency domain resources is achieved.

**Claims**

1. A resource scheduling method, comprising:

   determining (S202) radio baseband and Radio Frequency, RF, capabilities supported by a specified User Equipment, UE;
   acquiring (S204) a parameter value of a service traffic parameter corresponding to a to-be-processed service of a UE in a preset network element, wherein the service traffic parameter is used for representing a data volume required to be sent via an air interface within preset time in order to transmit the to-be-processed service;
   determining (S206), according to the determined radio baseband and RF capabilities as well as the acquired parameter value, a Radio Scheduling Element, RSE, used for performing resource scheduling for the specified UE, wherein the RSE is a Resource Block, RB, having a changeable carrier span and carrier quantity and/or having a changeable time-domain symbol length and time-domain symbol quantity; and
   performing (S208) the resource scheduling for the specified UE according to the determined RSE.

2. The method as claimed in claim 1, wherein acquiring (S204) the parameter value of the service traffic parameter corresponding to the to-be-processed service of the UE in the preset network element comprises:

   extracting each service in the to-be-processed service respectively, and determining a value $(T_r, B_r)$ of a parameter 2-tuple $(T, B)$ corresponding to each service, wherein the parameter 2-tuple $(T, B)$ is used for representing that B bits of data are required to be sent via the air interface within time T in order to transmit the service, r is an integer in an interval from 0 to a preset value, and the preset value is a number of Downlink, DL, and Uplink, UL, services of the UE in the preset network element; and
   acquiring the parameter value of the service traffic parameter according to the determined value $(T_r, B_r)$ of the parameter 2-tuple $(T, B)$.

3. The method as claimed in claim 2, wherein determining (S206), according to the determined radio baseband and RF capabilities as well as the acquired parameter value, the RSE used for performing the resource scheduling for the specified UE comprises:

   determining an RSE set of the preset network element according to the determined radio baseband and RF capabilities as well as the acquired parameter value; and
   selecting from the RSE set one or more RSEs used for performing the resource scheduling for the specified UE.

4. The method as claimed in claim 3, wherein the selecting from the RSE set one or more RSEs used for performing the resource scheduling for the specified UE comprises:

   determining an RSE sub-set of the RSE set, wherein the RSE sub-set is a set composed of RSEs, except for RSEs already allocated to a UE before the specified UE, in the RSE set; and
   according to a parameter value of a service traffic parameter corresponding to a to-be-processed service of the specified UE, sequentially selecting from the RSE sub-set one or more RSEs used for performing the resource scheduling for the specified UE according to an ascending sequence of physical resource occupation size of the RSEs.

5. The method as claimed in claim 3, wherein the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

6. The method as claimed in claim 1, wherein the RSE is determined based on the following parameters: a frequency domain resource parameter for allocating a frequency domain resource, and a time domain resource parameter for allocating a time domain resource; wherein the frequency domain resource parameter comprises: a single carrier span parameter for adjusting a carrier span, and a carrier number parameter for indicating a quantity of carriers, and the time domain resource parameter comprises: a time domain single-symbol span for adjusting a length of a time domain symbol, and a symbol number parameter for indicating a quantity of time domain symbols.

7. The method as claimed in any one of claims 1 to 6, wherein the radio baseband and RF capabilities comprise at least one of the followings: Long Term Evolution, LTE, Frequency Division Duplexing, FDD, LTE Time Division Duplexing, TDD, 5th Generation, 5G, or Narrow Band Internet of Things, NBiot.

8. A resource scheduling apparatus (122), comprising:

a first determination module (112), configured to determine radio baseband and Radio Frequency, RF, capabilities supported by a specified User Equipment, UE;
an acquisition module (114), configured to acquire a parameter value of a service traffic parameter corresponding to a to-be-processed service of a UE in a preset network element, wherein the service traffic parameter is used for representing a data volume required to be sent via an air interface within preset time in order to transmit the to-be-processed service;
a second determination module (116), configured to determine, according to the determined radio baseband and RF capabilities as well as the acquired parameter value, a Radio Scheduling Element, RSE, used for performing resource scheduling for the specified UE, wherein the RSE is a Resource Block, RB, having a changeable carrier span and carrier quantity and/or having a changeable time-domain symbol length and time-domain symbol quantity; and
a scheduling module (118), configured to perform, according to the determined RSE, the resource scheduling for the specified UE.

9. The apparatus (122) as claimed in claim 8, wherein the acquisition module (114) is further configured to extract each service in the to-be-processed service respectively, and determine a value $(T_r, B_r)$ of a parameter 2-tuple $(T, B)$ corresponding to each service, wherein the parameter 2-tuple $(T, B)$ is used for representing that B bits of data are required to be sent via the air interface within time T in order to transmit the service, r is an integer in an interval from 0 to a preset value, and the preset value is a number of DL and UL services of the UE in the preset network element; and acquire the parameter value of the service traffic parameter according to the determined value $(T_r, B_r)$ of the parameter 2-tuple $(T, B)$.

10. The apparatus (122) as claimed in claim 9, wherein the acquisition module (114) comprises:

a determination unit, configured to determine an RSE set of the preset network element according to the determined radio baseband and RF capabilities as well as the acquired parameter value; and
a selection unit, configured to select from the RSE set one or more RSEs used for performing the resource scheduling for the specified UE.

11. The apparatus (122) as claimed in claim 10, wherein the selection unit is further configured to determine an RSE sub-set of the RSE set, wherein the RSE sub-set is a set composed of RSEs, except for RSEs already allocated to a UE before the specified UE, in the RSE set; and sequentially select, from the RSE sub-set according to a parameter value of a service traffic parameter corresponding to a to-be-processed service of the specified UE, one or more RSEs used for performing the resource scheduling for the specified UE according to an ascending sequence of physical resource occupation size of the RSEs.

12. The apparatus (122) as claimed in claim 10, wherein the determined RSE set meets the following conditions: total amount of frequency domain resources occupied by the RSEs in the RSE set are smaller than or equal to a system bandwidth, and a time-domain symbol length of each RSE in the RSE set is smaller than or equal to a service time delay T of a corresponding to-be-processed service.

**13.** A resource scheduling system, comprising the resource scheduling apparatus (122) as claimed in any one of claims 8 to 12.

**14.** A storage medium, comprising a stored program, wherein the program executes the method as claimed in any one of claims 1 to 7 when being run.

**15.** A processor, configured to run a program, wherein the program executes the method as claimed in any one of claims 1 to 7 when being run.

**Patentansprüche**

**1.** Ressourcenplanungsverfahren, das umfasst:

Bestimmen (S202) von Funkbasisband- und Funkfrequenzfähigkeiten, HF, die von einem spezifizierten Benutzergerät, UE, unterstützt werden;
Erfassen (S204) eines Parameterwerts eines Dienstverkehrsparameters, der einem zu verarbeitenden Dienst eines UE in einem voreingestellten Netzwerkelement entspricht, wobei der Dienstverkehrsparameter zum Darstellen eines Datenvolumens verwendet wird, das mittels einer Luftschnittstelle innerhalb voreingestellter Zeit gesendet werden muss, um den zu verarbeitenden Dienst zu übertragen;
Bestimmen (S206) gemäß den bestimmten Funkbasisband- und HF-Fähigkeiten sowie dem erfassten Parameterwert eines Funkplanungselements, RSE, das zum Durchführen von Ressourcenplanung für das spezifizierte UE verwendet wird, wobei das RSE ein Ressourcenblock, RB, ist, der eine veränderbare Trägerspanne und Trägermenge und/oder eine veränderbare Zeitbereichssymbollänge und Zeitbereichssymbolmenge aufweist; und
Durchführen (S208) der Ressourcenplanung für das spezifizierte UE gemäß dem bestimmten RSE.

**2.** Verfahren nach Anspruch 1, wobei das Erfassen (S204) des Parameterwerts des Dienstverkehrsparameters, der dem zu verarbeitenden Dienst des UE in dem voreingestellten Netzwerkelement entspricht, umfasst:

Extrahieren jedes Dienstes in dem zu verarbeitenden Dienst und Bestimmen eines Wertes $(T_r, B_r)$ eines Parameter-2-Tupels $(T,B)$, das jedem Dienst entspricht, wobei das Parameter-2-Tupel $(T,B)$ verwendet wird, um darzustellen, dass B Datenbits über die Luftschnittstelle innerhalb der Zeit T gesendet werden müssen, um den Dienst zu übertragen, r eine ganze Zahl in einem Intervall von 0 bis zu einem voreingestellten Wert ist, und der voreingestellte Wert eine Anzahl von Downlink-, DL, und Uplink-, UL, -Diensten des UE in dem voreingestellten Netzwerkelement ist; und
Erfassen des Parameterwerts des Dienstverkehrsparameters gemäß dem bestimmten Wert $(Tr, Br)$ des Parameter-2-Tupels $(T,B)$.

**3.** Verfahren nach Anspruch 2, wobei das Bestimmen (S206) gemäß den bestimmten Funkbasisband- und HF-Fähigkeiten sowie dem erfassten Parameterwert das zum Durchführen der Ressourcenplanung für das spezifizierte UE verwendete RSE umfasst:

Bestimmen eines RSE-Satzes des voreingestellten Netzwerkelements gemäß den bestimmten Funkbasisband- und HF-Fähigkeiten sowie dem erfassten Parameterwert; und
Auswählen eines oder mehrerer RSEs aus dem RSE-Satz, die zum Durchführen der Ressourcenplanung für das spezifizierte UE verwendet werden.

**4.** Verfahren nach Anspruch 3, wobei das Auswählen eines oder mehrerer RSEs aus dem RSE-Satz, die zum Durchführen der Ressourcenplanung für das spezifizierte UE verwendet werden, umfasst:

Bestimmen eines RSE-Untersatzes der RSE-Satzes, wobei der RSE-Untersatz ein Satz ist, der aus RSEs zusammengesetzt ist, mit Ausnahme von RSEs, die bereits einem UE vor dem spezifizierten UE in der RSE-Satz zugewiesen sind; und
gemäß einem Parameterwert eines Dienstverkehrsparameters, der einem zu verarbeitenden Dienst des spezifizierten UE entspricht, sequenzielles Auswählen eines oder mehrerer RSEs aus dem RSE-Untersatz, die zum Durchführen der Ressourcenplanung für das spezifizierte UE gemäß einer aufsteigenden Sequenz der Belegungsgröße der physischen Ressourcen der RSEs verwendet werden.

**5.** Verfahren nach Anspruch 3, wobei der bestimmte RSE-Satz die folgenden Bedingungen erfüllt: die Gesamtmenge von Frequenzbereichsressourcen, die von den RSEs in dem RSE-Satz belegt werden, ist kleiner als oder gleich einer Systembandbreite, und eine Zeitbereichssymbollänge jedes RSE in dem RSE-Satz ist kleiner als oder gleich einer Dienstzeitverzögerung T eines entsprechenden zu verarbeitenden Dienstes.

**6.** Verfahren nach Anspruch 1, wobei das RSE basierend auf den folgenden Parametern bestimmt wird: einem Frequenzbereichsressourcenparameter zum Zuweisen einer Frequenzbereichsressource und einem Zeitbereichsressourcenparameter zum Zuweisen einer Zeitbereichsressource; wobei der Frequenzbereichsressourcenparameter umfasst: einen einzelnen Trägerspannenparameter zum Einstellen einer Trägerspanne und einen Trägeranzahlparameter zum Angeben einer Anzahl von Trägern, und der Zeitbereichsressourcenparameter umfasst: einen Zeitbereichseinzelsymbolbereich zum Einstellen einer Länge eines Zeitbereichssymbols, und einen Symbolanzahlparameter zum Angeben einer Anzahl von Zeitbereichssymbolen.

**7.** Verfahren nach einem der Ansprüche 1 bis 6, wobei das Funkbasisband und die HF-Fähigkeiten mindestens eines von Folgendem umfassen: Long Term Evolution, LTE, Frequency Division Duplex, FDD, LTE, Time Division Duplexing, TDD, 5th Generation, 5G oder Narrow Band Internet of Things, NBiot.

**8.** Ressourcenplanungsvorrichtung (122), die umfasst:

ein erstes Bestimmungsmodul (112), das konfiguriert ist, um Funkbasisband- und Funkfrequenz-Fähigkeiten, HF, zu bestimmen, die von einem spezifizierten Benutzergerät, UE, unterstützt werden;
ein Erfassungsmodul (114), das konfiguriert ist, um einen Parameterwert eines Dienstverkehrsparameters zu erfassen, der einem zu verarbeitenden Dienst eines UE in einem voreingestellten Netzwerkelement entspricht, wobei der Dienstverkehrsparameter zum Darstellen eines Datenvolumens verwendet wird, das über eine Luftschnittstelle innerhalb voreingestellter Zeit gesendet werden muss, um den zu verarbeitenden Dienst zu übertragen;
ein zweites Bestimmungsmodul (116), das konfiguriert ist, um gemäß den bestimmten Funkbasisband- und HF-Fähigkeiten sowie dem erfassten Parameterwert ein Funkplanungselements, RSE, zu bestimmen, das zum Durchführen von Ressourcenplanung für das spezifizierte UE verwendet wird, wobei das RSE ein Ressourcenblock, RB, ist, der eine veränderbare Trägerspanne und Trägermenge und/oder eine veränderbare Zeitbereichssymbollänge und Zeitbereichssymbolmenge aufweist; und
ein Planungsmodul (118), das konfiguriert ist, um gemäß dem bestimmten RSE die Ressourcenplanung für das spezifizierte UE durchzuführen.

**9.** Vorrichtung (122) nach Anspruch 8, wobei das Erfassungsmodul (114) ferner konfiguriert ist, um jeden Dienst in dem zu verarbeitenden Dienst jeweils zu extrahieren und einen Wert $(T_i, B_i)$ eines Parameter-2-Tupels $(T, B)$ zu bestimmen, der jedem Dienst entspricht, wobei das Parameter-2-Tupel $(T,B)$ verwendet wird, um darzustellen, dass B Datenbits mittels der Luftschnittstelle innerhalb der Zeit T gesendet werden müssen, um den Dienst zu übertragen, r eine ganze Zahl in einem Intervall von 0 bis zu einem voreingestellten Wert ist, und der voreingestellte Wert eine Anzahl von DL- und UL-Diensten des UE in dem voreingestellten Netzwerkelement ist; und Erfassen des Parameterwerts des Dienstverkehrsparameters gemäß dem bestimmten Wert $(T_i, B_i)$ des Parameter-2-Tupels $(T,B)$.

**10.** Vorrichtung (122) nach Anspruch 9, wobei das Erfassungsmodul (114) umfasst:

eine Bestimmungseinheit, die konfiguriert ist, um einen RSE-Satz des voreingestellten Netzwerkelements gemäß den bestimmten Funkbasisband- und HF-Fähigkeiten sowie dem erfassten Parameterwert zu bestimmen; und
eine Auswahleinheit, die konfiguriert ist, um aus dem RSE-Satz ein oder mehrere RSEs auszuwählen, die zum Durchführen der Ressourcenplanung für das spezifizierte UE verwendet werden.

**11.** Vorrichtung (122) nach Anspruch 10, wobei die Auswahleinheit ferner konfiguriert ist, um einen RSE-Untersatz des RSE-Satzes zu bestimmen, wobei der RSE-Untersatz ein Satz ist, der aus RSEs zusammengesetzt ist, mit Ausnahme von RSEs, die bereits einem UE vor dem spezifizierten UE in dem RSE-Satz zugewiesen sind; und sequenzielles Auswählen eines oder mehrerer RSEs aus dem RSE-Untersatz gemäß einem Parameterwert eines Dienstverkehrsparameters, die zum Durchführen der Ressourcenplanung für das spezifizierte UE gemäß einer aufsteigenden Sequenz der Belegungsgröße der physischen Ressourcen der RSEs verwendet werden.

**12.** Vorrichtung (122) nach Anspruch 10, wobei der bestimmte RSE-Satz die folgenden Bedingungen erfüllt: die Gesamtmenge von Frequenzbereichsressourcen, die von den RSEs in dem RSE-Satz belegt werden, ist kleiner als oder gleich einer Systembandbreite, und eine Zeitbereichssymbollänge jedes RSE in dem RSE-Satz ist kleiner als oder gleich einer Dienstzeitverzögerung T eines entsprechenden zu verarbeitenden Dienstes.

**13.** Ressourcenplanungssystem, das die Ressourcenplanungsvorrichtung (122), wie in einem der Ansprüche 8 bis 12 beansprucht, umfasst.

**14.** Speichermedium, das ein gespeichertes Programm umfasst, wobei das Programm das Verfahren, wie in einem der Ansprüche 1 bis 7 beansprucht, wenn es betrieben wird, ausführt.

**15.** Prozessor, der zum Ausführen eines Programms konfiguriert ist, wobei das Programm das Verfahren wie in einem der Ansprüche 1 bis 7 beansprucht, wenn es betrieben wird, ausführt.

**Revendications**

**1.** Procédé de programmation de ressources, comprenant :

la détermination (S202) des capacités de bande de base radio et de fréquence radio, RF, prises en charge par un équipement utilisateur, UE, spécifié ;
l'acquisition (S204) d'une valeur d'un paramètre de trafic de service correspondant à un service à traiter d'un UE dans un élément de réseau prédéfini, le paramètre de trafic de service étant utilisé pour représenter un volume de données devant être envoyé par l'intermédiaire d'une interface radio dans un délai prédéfini afin de transmettre le service à traiter ;
la détermination (S206), en fonction des capacités de bande de base radio et RF déterminées ainsi que de la valeur de paramètre acquise, d'un élément de programmation radio, RSE, utilisé pour exécuter la programmation de ressources pour l'UE spécifié, le RSE étant un bloc de ressources, RB, ayant une étendue de porteuse et une quantité de porteuse modifiables et/ou ayant une longueur de symbole dans le domaine temporel et une quantité de symbole dans le domaine temporel modifiables ; et
l'exécution (S208) de la programmation des ressources pour l'UE spécifié conformément au RSE déterminé.

**2.** Procédé selon la revendication 1, dans lequel l'acquisition (S204) de la valeur du paramètre de trafic de service correspondant au service à traiter de l'UE dans l'élément de réseau prédéfini comprend :

l'extraction respective de chaque service dans le service à traiter et la détermination d'une valeur ($T_r, B_r$) d'un paramètre 2-tuple ($T, B$) correspondant à chaque service, le paramètre 2-tuple ($T, B$) étant utilisé pour représenter que B bits de données doivent être envoyés par l'intermédiaire de l'interface radio dans le temps T afin de transmettre le service, r étant un entier dans un intervalle de 0 à une valeur prédéfinie et la valeur prédéfinie étant un nombre des services de liaison descendante, DL et de liaison montante, UL, de l'UE dans l'élément de réseau prédéfini ; et
l'acquisition de la valeur du paramètre de trafic de service en fonction de la valeur déterminée ($T_r, B_r$) du paramètre 2-tuple ($T, B$).

**3.** Procédé selon la revendication 2, dans lequel la détermination (S206), selon les capacités de bande de base radio et RF déterminées ainsi que la valeur de paramètre acquise, le RSE utilisé pour exécuter la programmation des ressources pour l'UE spécifié comprend :

la détermination d'un ensemble RSE de l'élément de réseau prédéfini en fonction des capacités de bande de base radio et RF déterminées ainsi que de la valeur de paramètre acquise ; et
la sélection dans l'ensemble RSE d'un ou de plusieurs RSE utilisés pour exécuter la programmation des ressources pour l'UE spécifié.

**4.** Procédé selon la revendication 3, dans lequel la sélection dans l'ensemble RSE d'un ou de plusieurs RSE utilisés pour exécuter la programmation des ressources pour l'UE spécifié comprend :

la détermination d'un sous-ensemble RSE de l'ensemble RSE, le sous-ensemble RSE étant un ensemble composé de RSE, à l'exception des RSE déjà attribués à un UE avant l'UE spécifié, dans l'ensemble RSE ; et
selon une valeur de paramètre d'un paramètre de trafic de service correspondant à un service à traiter de l'UE spécifié, la sélection séquentielle dans le sous-ensemble RSE d'un ou de plusieurs RSE utilisés pour exécuter la programmation des ressources pour l'UE spécifié selon une séquence croissante de la taille d'occupation des ressources physiques des RSE.

5. Procédé selon la revendication 3, dans lequel l'ensemble RSE déterminé satisfait aux conditions suivantes : la quantité totale de ressources du domaine fréquentiel occupée par les RSE dans l'ensemble RSE est inférieure ou égale à une largeur de bande système et une longueur de symbole dans le domaine temporel de chaque RSE dans l'ensemble RSE est inférieure ou égale à un délai de temps de service T d'un service à traiter correspondant.

6. Procédé selon la revendication 1, dans lequel le RSE est déterminé sur la base des paramètres suivants : un paramètre de ressource de domaine fréquentiel pour attribuer une ressource de domaine fréquentiel et un paramètre de ressource de domaine temporel pour attribuer une ressource de domaine temporel ; dans lequel le paramètre de ressource de domaine fréquentiel comprend : un seul paramètre d'étendue de porteuse pour ajuster une étendue de porteuse et un paramètre de nombre de porteuse pour indiquer une quantité de porteuses et le paramètre de ressource de domaine temporel comprend : une étendue de symbole unique de domaine temporel pour ajuster une longueur d'un symbole de domaine temporel et un paramètre de nombre de symbole pour indiquer une quantité de symboles de domaine temporel.

7. Procédé selon l'une quelconque des revendications 1 à 6, dans lequel les capacités de bande de base radio et RF comprennent au moins un élément parmi : évolution à long terme, LTE, duplexage par répartition de fréquence, FDD, duplexage par répartition temporelle LTE, TDD, 5$^e$ génération, 5G, ou Internet des objets à bande étroite, NBiot.

8. Appareil de programmation de ressources (122), comprenant :

un premier module de détermination (112), configuré pour déterminer les capacités de bande de base radio et de fréquence radio, RF, prises en charge par un équipement utilisateur spécifié, UE ;
un module d'acquisition (114), configuré pour acquérir une valeur d'un paramètre de trafic de service correspondant à un service à traiter d'un UE dans un élément de réseau prédéfini, dans lequel le paramètre de trafic de service est utilisé pour représenter un volume de données devant être envoyé par l'intermédiaire d'une interface radio dans un délai prédéfini afin de transmettre le service à traiter ;
un second module de détermination (116), configuré pour déterminer, en fonction des capacités de bande de base radio et RF déterminées ainsi que de la valeur de paramètre acquise, un élément de programmation radio, RSE, utilisé pour exécuter la programmation de ressources pour l'UE spécifié, dans lequel le RSE est un bloc de ressources, RB, ayant une étendue de porteuse et une quantité de porteuse modifiables et/ou ayant une longueur de symbole dans le domaine temporel et une quantité de symbole dans le domaine temporel modifiables ; et
un module de programmation (118), configuré pour effectuer, selon le RSE déterminé, la programmation des ressources pour l'UE spécifié.

9. Appareil (122) selon la revendication 8, dans lequel le module d'acquisition (114) est en outre configuré pour extraire chaque service dans le service à traiter respectivement et pour déterminer une valeur ($T_r$,$B_r$) d'un paramètre 2-tuple ($T,B$) correspondant à chaque service, dans lequel le paramètre 2-tuple ($T,B$) est utilisé pour représenter que B bits de données doivent être envoyés par l'intermédiaire de l'interface radio dans le temps T afin de transmettre le service, r est un entier dans un intervalle de 0 à une valeur prédéfinie et la valeur prédéfinie est un nombre de services DL et UL de l'UE dans l'élément de réseau prédéfini ; et acquérir la valeur de paramètre du paramètre de trafic de service en fonction de la valeur déterminée ($T_r$,$B_r$) du paramètre 2-tuple ($T,B$).

10. Appareil (122) selon la revendication 9, dans lequel le module d'acquisition (114) comprend :

une unité de détermination, configurée pour déterminer un ensemble RSE de l'élément de réseau prédéfini en fonction des capacités de bande de base radio et RF déterminées ainsi que de la valeur de paramètre acquise ; et
une unité de sélection, configurée pour sélectionner dans l'ensemble RSE un ou plusieurs RSE utilisés pour exécuter la programmation des ressources pour l'UE spécifié.

11. Appareil (122) selon la revendication 10, dans lequel l'unité de sélection est en outre configurée pour déterminer un sous-ensemble RSE de l'ensemble RSE, dans lequel le sous-ensemble RSE est un ensemble composé de RSE, à l'exception des RSE déjà attribués à un UE avant l'UE spécifié, dans l'ensemble RSE ; et sélectionner de manière séquentielle, dans le sous-ensemble RSE en fonction d'une valeur de paramètre d'un paramètre de trafic de service correspondant à un service à traiter de l'UE spécifié, un ou plusieurs RSE utilisés pour exécuter la programmation des ressources pour l'UE spécifié selon une séquence croissante de la taille d'occupation des ressources physiques des RSE.

12. Appareil (122) selon la revendication 10, dans lequel l'ensemble RSE déterminé satisfait aux conditions suivantes : la quantité totale de ressources du domaine fréquentiel occupée par les RSE dans l'ensemble RSE est inférieure ou égale à une largeur de bande système et une longueur de symbole dans le domaine temporel de chaque RSE dans l'ensemble RSE est inférieure ou égale à un délai de temps de service T d'un service à traiter correspondant.

13. Système de programmation de ressources, comprenant l'appareil de programmation de ressources (122) selon l'une quelconque des revendications 8 à 12.

14. Support de stockage, comprenant un programme stocké, dans lequel le programme réalise le procédé selon l'une quelconque des revendications 1 à 7 lorsqu'il est exécuté.

15. Processeur, configuré pour exécuter un programme, dans lequel le programme réalise le procédé selon l'une quelconque des revendications 1 à 7 lorsqu'il est exécuté.

Base station 10

Processor 12

Transmission apparatus 16

Memory 14

**Fig. 1**

| Determine radio baseband and RF capabilities supported by a specified UE | S202 |

| Acquire a parameter value of a service traffic parameter corresponding to a to-be-processed service of a UE in a preset network element, wherein the service traffic parameter is used for representing a data volume required to be sent via an air interface within preset time in order to transmit the to-be-processed service | S204 |

| Determine an RSE used for performing resource scheduling for the specified UE according to the determined radio baseband and RF capabilities as well as the acquired parameter value, wherein the RSE is an RB having a changeable carrier span and carrier quantity and/or having a changeable time-domain symbol length and time-domain symbol quantity | S206 |

| Perform the resource scheduling for the specified UE according to the determined RSE | S208 |

**Fig. 2**

| | |
|---|---|
| Design and initialize RSEs | S302 |
| Identify a UE type, and abstract UE service characteristics | S304 |
| Determine an RSE set of a UE | S306 |
| Determine specifications, number and positions of the RSEs to form a final scheduling result | S308 |

**Fig. 3**

One subframe

$R_j$ Symbol

$RSE_{ij}$

$M\ (Hz)$

$C_j$ Sub-carriers

Symbol span $T_{s\ i}$

Sub-carrier frequency span $F_{s\ i}$

**Fig. 4**

**Fig. 5**

Fig. 6

One radio frame, $T_f = 307200\,T_s = 10$ ms

One half frame, $153600\,T_s = 5$ ms

One time slot,
$T_{slot} = 15360\,T_s$

$30720\,T_s$

| Subframe #0 | | | | Subframe #2 | Subframe #3 | Subframe #4 | Subframe #5 | | | | Subframe #7 | Subframe #8 | Subframe #9 |

One subframe
$30720\,T_s$

DwPTS    GP    UpPTS

DwPTS    GP    UpPTS

LTE TDD radio frame structure in chapter 4 of 3Gpp specs TS36.211

**Fig. 7**

Frequency

RSE for DL and UL

Resource scheduling result for DL and UL, including one or more RSEs

RB for DL    RB for UL

Frequency for UL

Time

Frequency for DL

LTE FDD    Time

Frequency

LTE TDD configuration 2    Time

Time

RSE resource allocation

LTE resource allocation

**Fig. 8**

One radio frame, $T_f = 307200 T_s = 10$ ms

One time slot, $T_{slot} = 15360 T_s = 0.5$ ms

| #0 | #1 | #2 | #3 | ·········· | #18 | #19 |

One subframe

LTE FDD radio frame structure in chapter 4 of 3Gpp specs TS36.211

**Fig. 9**

RSE initialization module — 102

Processing object input module — 104

RSE set determination module — 106

Scheduling processing and result output module — 108

**Fig. 10**

First determination
module / 112

Acquisition module / 114

Second determination
module / 116

Scheduling module / 118

**Fig. 11**

Resource scheduling
apparatus / 122

Resource scheduling system

**Fig. 12**

**EP 3 550 903 B1**

### Patent documents cited in the description

- WO 2016142132 A1
- US 2007217362 A1
- US 2015256308 A1